Europäisches Patentamt

**European Patent Office**

**Office européen des brevets**

(19)

(11) Veröffentlichungsnummer: **0 107 836
B1**

(12) # EUROPÄISCHE PATENTSCHRIFT

(45) Veröffentlichungstag der Patentschrift:
15.07.87

(51) Int. Cl.⁴: **F 16 H 35/02**

(21) Anmeldenummer: **83110295.9**

(22) Anmeldetag: **15.10.83**

(54) **Getriebe zur Erzeugung eines ungleichförmigen Abtriebes aus einem gleichförmigen Antrieb.**

(30) Priorität: **26.10.82 CH 6251/82**

(43) Veröffentlichungstag der Anmeldung:
**09.05.84 Patentblatt 84/19**

(45) Bekanntmachung des Hinweises auf die Patenterteilung:
**15.07.87 Patentblatt 87/29**

(84) Benannte Vertragsstaaten:
**AT BE CH DE FR GB IT LI NL SE**

(73) Patentinhaber: **Textilma AG, Seestrasse 97,
CH-6052 Hergiswil (CH)**

(72) Erfinder: **Speich, Francisco, Bleumattstrasse 10,
CH-5264 Gipf-Oberfrick (CH)**

(74) Vertreter: **Schmauder, Klaus Dieter et al, c/o Schmauder
& Wann Patentanwaltsbüro Nidelbadstrasse 75,
CH-8038 Zürich (CH)**

(56) Entgegenhaltungen:
**EP - A - 0 035 954
AT - B - 307 842
DE - A - 2 415 778
DE - A - 2 621 565
DE - A - 2 800 835
DE - A - 3 108 576
DE - B - 1 129 029
DE - B - 1 933 721
DE - B - 2 937 760
US - A - 3 508 451**

ACTORUM AG

**Beschreibung**

Die Erfindung betrifft ein Getriebe gemäss Oberbegriff des Anspruches 1.

Ein Getriebe der eingangs genannten Art ist beispielsweise aus der DE-A 3 108 576 bekannt. Bei einem solchen Getriebe ist die Kurbel der Kurbelwelle mit einem Koppelglied verbunden, welches an einem Schwingarm angelenkt ist, der wiederum drehfest mit der Abtriebswelle verbunden ist. Dieses Getriebe weist zwar einen äusserst einfachen, verschleiss- und spielarmen Aufbau auf, doch ist ein Nachstellen des Spiels nicht möglich. Ausserdem ergeben sich bei der Bewegungskurve der Abtriebswelle relativ breite Verläufe der Maxima und Minima der Bewegungen und gewisse Verzerrungen der Bewegungskurve relativ zur Abtriebswelle, was für Hochleistungswebmaschinen sehr nachteilig ist.

Aus der DE-B 2 937 760 ist ein Getriebe für den Fachbildungsmechanismus einer Webmaschine bekannt, mit dem aus einem gleichförmigen Antrieb ein ungleichförmiger Abtrieb erzeugt werden kann. Bei diesem Getriebe ist ein zweiarmiger Rotor drehfest mit der fliegend gelagerten Antriebswelle verbunden. Jeder Arm enthält ein verschwenkbar gelagertes Zahnsegment mit je zwei in verschiedenen Ebenen angeordneten Kurvenrollen. Das Zahnsegment steht mit einem auf der fliegend gelagerten Abtriebswelle drehfest angeordneten Abtriebsritzel im Eingriff. Die Kurvenrollen wirken Kraft- und/oder formschlüssig mit zwei in verschiedenen Ebenen am Getriebegehäuse befestigten Kurvenscheiben zusammen, deren Asymmetrie eine einstellbare Relativbewegung zwischen der Antriebswelle und der Abtriebswelle je Umdrehung erzeugt. Bei diesem Getriebe stehen die Zahnsegmente und das Zahnrad nur über einen kleinen Drehwinkel im Dauereingriff.

Ein Nachstellen ist nicht möglich.

Aus der EP-A 0 035 954 ist ebenfalls ein Getriebe für eine Fachbildevorrichtung einer Webmaschine bekannt, welches dem der DE-B 2 937 760 praktisch entspricht, wobei die Zahnsegmente und Zahnräder durch eine Kulissenführung mit Führungsgabel und Gleitstein ersetzt ist. Die Kulissenführungen sind nicht nachstellbar.

Aus der DE-B 1 933 721 und der DE-B 1 129 029 sind für verschiedene Anwendungsgebiete ausserhalb der Textilindustrie wie Fördertechnik, Verpackungstechnik, Druckerei sowie Misch- und Knetmaschinen Getriebe bekannt, welche ein auf einer Achse drehbares Antriebsglied aufweisen, welches an um 180° versetzten Stellen Wellen trägt, an denen Planetenräder befestigt sind. Auf der einen Seite werden die Planetenräder von einem an einer Antriebswelle angeordneten Sonnenrad angetrieben und auf der anderen Seite kämmen die Planetenräder mit einem am Gehäuse ortsfesten Zahnrad. Die Planetenräder enthalten Kurbeln, die jeweils entweder über Lenker mit einer zweiarmigen Schwinge verbunden sind oder mittels Gleitsteinen an der zweiarmigen Schwinge eingreifen. Die zweiarmige Schwinge ist an einer Abtriebswelle angeordnet.

Aufgabe der Erfindung ist es, ein Getriebe der eingangs genannten Art so auszubilden, dass die Bewegungscharakteristik der Abtriebswelle relativ spitz verlaufende Maxima und Minima sowie einen gleichmässigen Verlauf aufweist, wobei ein verbesserter Massenausgleich möglich ist und der Verschleiss vermindert wird.

Die gestellte Aufgabe wird bei dem eingangs genannten Getriebe durch die kennzeichnenden Merkmale des Anspruches 1 gelöst. Es hat sich in überraschender Weise herausgestellt, dass sich bei einem Getriebe der eingangs genannten Art eine insbesonders für Fachbildevorrichtungen für Webmaschinen sehr vorteilhafte, spitze Maxima und Minima sowie gleichmässige Abläufe aufweisende Bewegungscharakteristik an der Abtriebswelle erzielen lässt, wenn die Kurbelwelle nicht über ein Koppelglied mit der Schwinge verbunden ist, sondern direkt auf diese einwirkt und hierzu eine zweite bezüglich der ersten Kurbel um 180° versetzt am Antriebsglied angeordnete Kurbel verwendet wird, die am zweiten Arm der zweiarmigen Schwinge angreift. Dabei wird durch den Lagerring an jeder Kurbel verbunden mit dem Reibkranz bzw. dem Zahnkranz, der mit dem Reibbelag bzw. der Zahnstange auf dem Arm zusammenwirkt, ein Durchrutschen des Lagerringes am Arm bei Bewegungsumkehr und damit ein Verschleiss weitgehend vermieden. Die doppelte, um 180° versetzte Anordnung der Kurbelwellen ermöglicht überdies die Übertragung grösserer Kräfte und einen guten Massenausgleich. Ausserdem gestattet es diese Ausgestaltung des Getriebes die Arme der Schwinge gegen die Kurbeln vorzuspannen, so dass das Getriebe spielfrei ausgebildet werden kann. Mit der erzielten Bewegungscharakteristik ist in Verbindung mit dem verbesserten Massenausgleich und der geringen Verschleissanfälligkeit ein ruhigerer und geräuscharmer Lauf selbst bei hohen Drehzahlen möglich.

Vorteilhafte Ausgestaltungen des Getriebes sind in den Ansprüchen 2 bis 3 umschrieben.

Das Getriebe ist zur Vermeidung des Spieles vorteilhafterweise nach Anspruch 2 weitergebildet. Dabei kann die Stellvorrichtung gemäss Anspruch 3 ausgestaltet sein. Dadurch lässt sich auch gleichzeitig der Abstand der Arme bezüglich der Kurbelwellen einstellen.

Das Getriebe lässt sich für verschiedene Verwendungszwecke einsetzen. Besonders vorteilhaft ist es für den Antrieb einer Fachbildevorrichtung einer Webmaschine, insbesondere einer Bandwebmaschine, wobei es besonders zweckmässig ist, wenn die Abtriebswelle des Getriebes gleichzeitig die Welle der Fachbildevorrichtung ist.

Ein Ausführungsbeispiel des erfindungsgemässen Getriebes wird nachfolgend anhand der Zeichnungen näher beschrieben, dabei zeigen:

Fig. 1: die Anordnung des Getriebes zum Antrieb einer Fachbildevorrichtung einer Webmaschine in schematischer Darstellung;

Fig. 2: das Getriebe der Figur 1 im Schnitt II–II der Figur 5;

Fig. 3 bis 7: das Getriebe der Figur 2 im Vertikalschnitt durch die Kurbeln der Kurbelwelle in verschiedenen Betriebsstellungen;

Fig. 8: das Getriebe gemäss Figur 2 in der Betriebsstellung gemäss Figur 7 im Grundriss; und

Fig. 9 und 10: Diagramme mit zwei Winkelgeschwindigkeiten der Abtriebswelle im Verhältnis zur Winkelgeschwindigkeit des Antriebsgliedes je nach Grösse des Kurbelradius R.

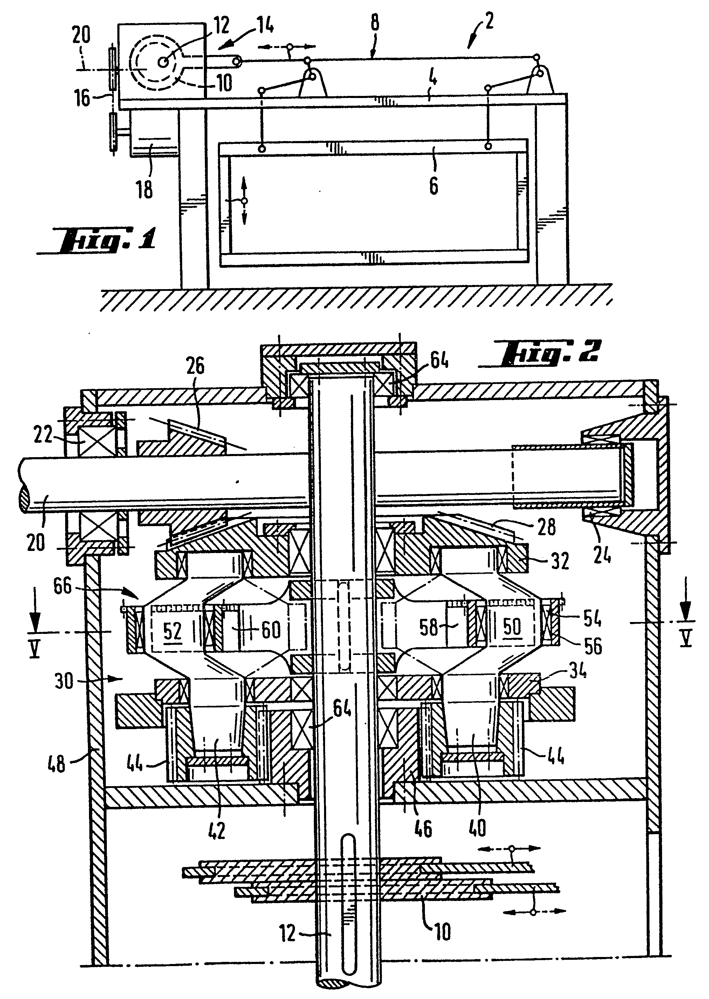

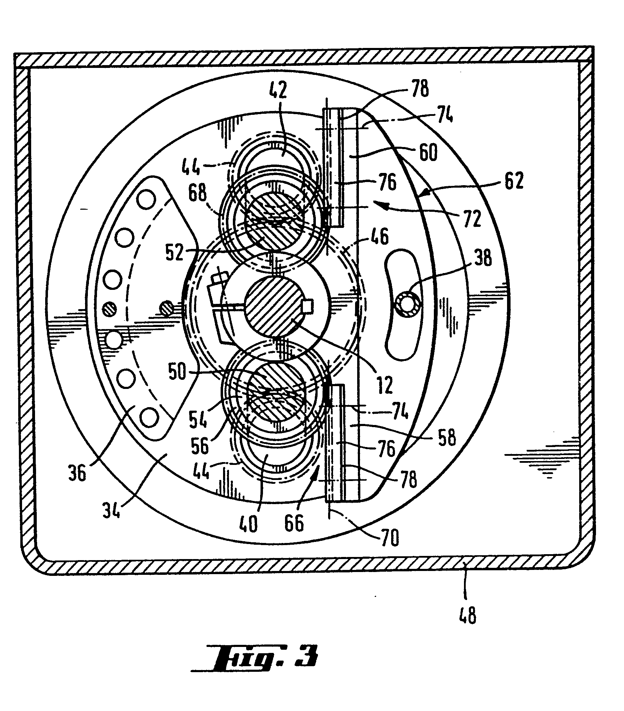

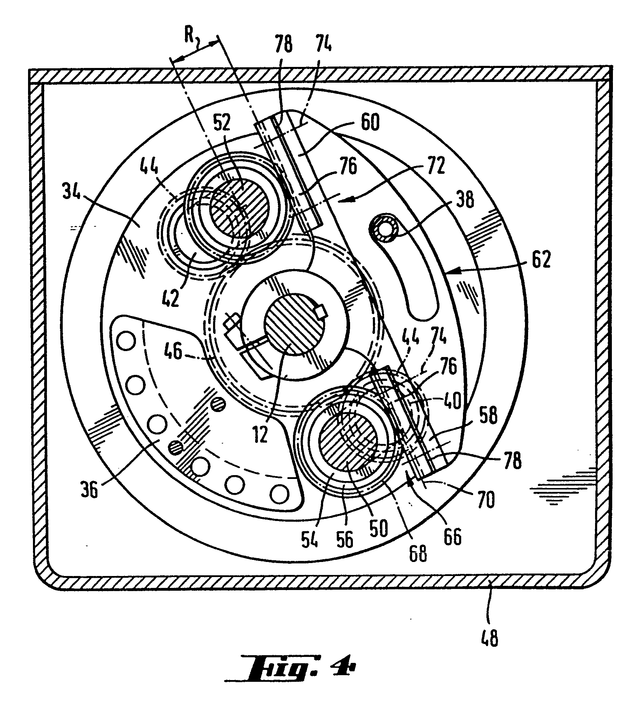

Die Figur 1 zeigt in schematischer Darstellung die Fachbildevorrichtung 2 einer Webmaschine. In einem Gestell 4 sind Schaftrahmen 6 angeordnet, die über Schaftzugorgane 8 gehalten und betätigt werden. Die Schaftzugorgane 8 sind wiederum mit Exzentern 10 verbunden, die auf einer Welle 12 angeordnet sind. Diese Welle 12 ist identisch mit der Abtriebswelle des Getriebes 14 zum Antrieb der Fachbildevorrichtung 2. Das Getriebe 14 wird über einen Kettentrieb 16 von einem Motor 18 oder einer sonstigen Antriebswelle der Webmaschine angetrieben.

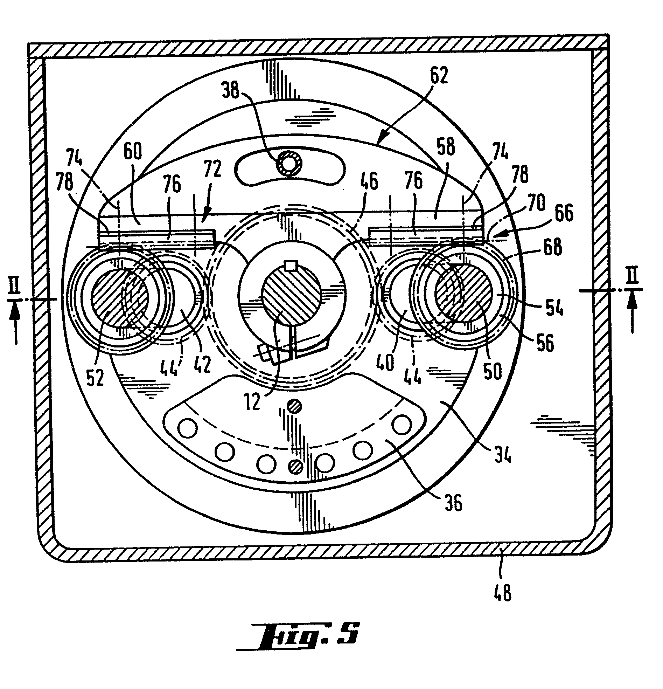

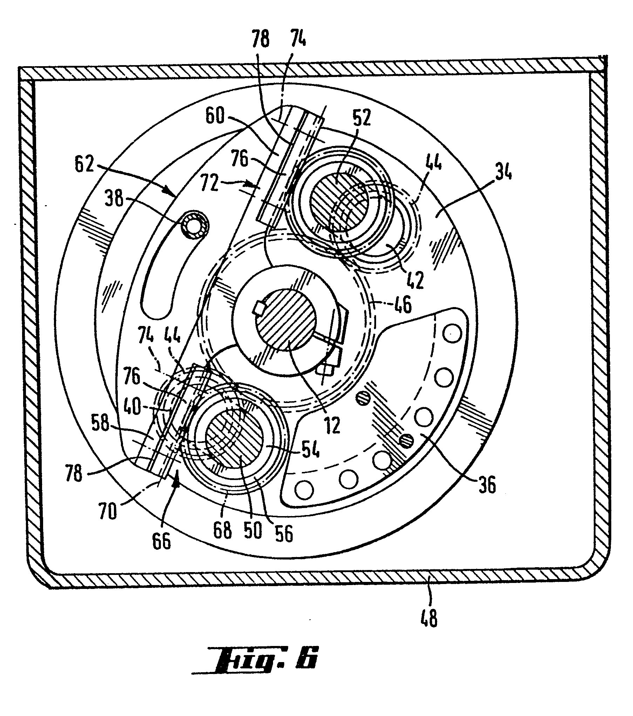

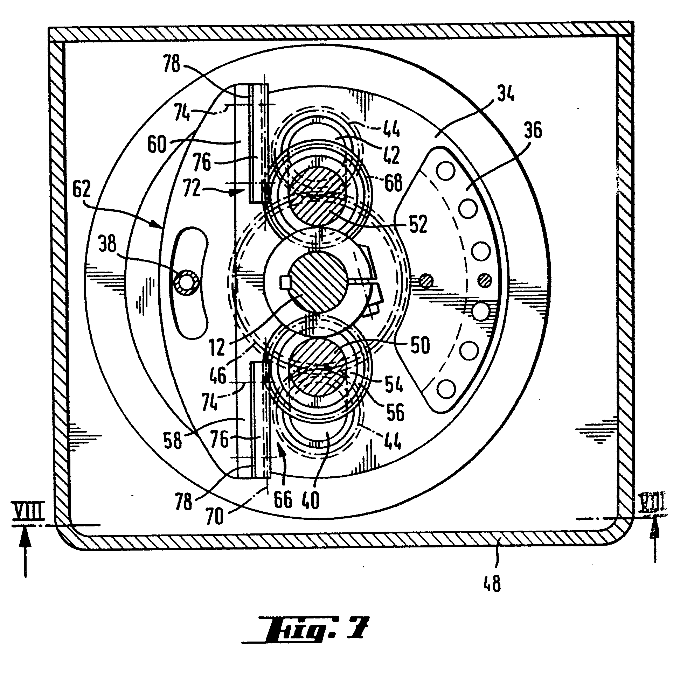

Das Getriebe 14 ist in den Figuren 2 bis 8 im einzelnen dargestellt. Die vom Kettentrieb 16 angetriebene Antriebswelle 20 ist bezüglich der Abtriebswelle 12 versetzt angeordnet und in zwei Lagern 22, 24 zweifach gelagert. Die Antriebswelle trägt ein Kegelritzel 26, das mit einem Kegelrad 28 kämmt, welches seitlich an einem Antriebsglied 30 angeordnet ist. Das käfigartig ausgebildete Antriebsglied 30 enthält zwei Wangen 32, 34, die einerseits über einen als Ausgleichsgewicht ausgebildeten Steg 36 und andererseits über einen Bolzen 38 miteinander verbunden sind. Die Wangen 32, 34 sind auf der Abtriebswelle 12 drehbar gelagert. Zwischen dem Steg 36 und dem Bolzen 38 tragen die Wangen 32, 34 an um 180° versetzten Stellen zwei Kurbelwellen 40, 42, die jeweils mit einem ausserhalb des Antriebsgliedes 30 liegenden Planetenrad 44 verbunden sind. Letztere wirken mit einem Sonnenrad 46 zusammen, welches am Gehäuse 48 ortsfest angeordnet ist. Die in den Wangen 32, 34 jeweils zweifach gelagerten Kurbelwellen 40, 42 weisen gegeneinander schwingende Kurbeln 50, 52 auf, an denen über Wälzlager 54 Lagerringe 56 angeordnet sind. Jede Kurbel 50, 52 wirkt über die Lagerringe 56 jeweils mit einem Arm 58, 60 einer zweiarmigen Schwinge 62 zusammen, die drehfest mit der Abtriebswelle 12 verbunden ist. Die Abtriebswelle 12 ist beidseits des Antriebsgliedes 30 in Lagern 64 des Gehäuses 48 gelagert.

Jeder Arm 58, 60 der Schwinge 62 enthält Mittel 66, die ein Durchrutschen der Lagerringe 56 bei der Änderung der Laufrichtung der Lagerringe 56 auf den Armen 58, 60 verhindern. Hierzu enthalten die Lagerringe 56 Zahnkränze 68, die mit Zahnstangen 70 auf den Armen 58, 60 kämmen.

Weiter enthält das Getriebe Mittel 72 zur Einstellung des Spiels zwischen den Kurbeln 50, 52 und der Schwinge 62. Die Mittel 72 zur Spieleinstellung enthalten eine Stellvorrichtung 74 zur Einstellung des Abstandes der Arme 58, 60 bezüglich der Kurbelwellen 40, 42. Hierzu weisen die Arme 58, 60 Laufblöcke 76 für die Lagerringe 56 der Kurbeln 50, 52 auf, die mit den Armen 58, 60 verschraubt sind. Mittels auswechselbarer Unterlegbleche 78 können die Abstände der Laufblöcke 76 bezüglich der Kurbeln 50, 52 so eingestellt werden, dass kein Spiel vorhanden ist.

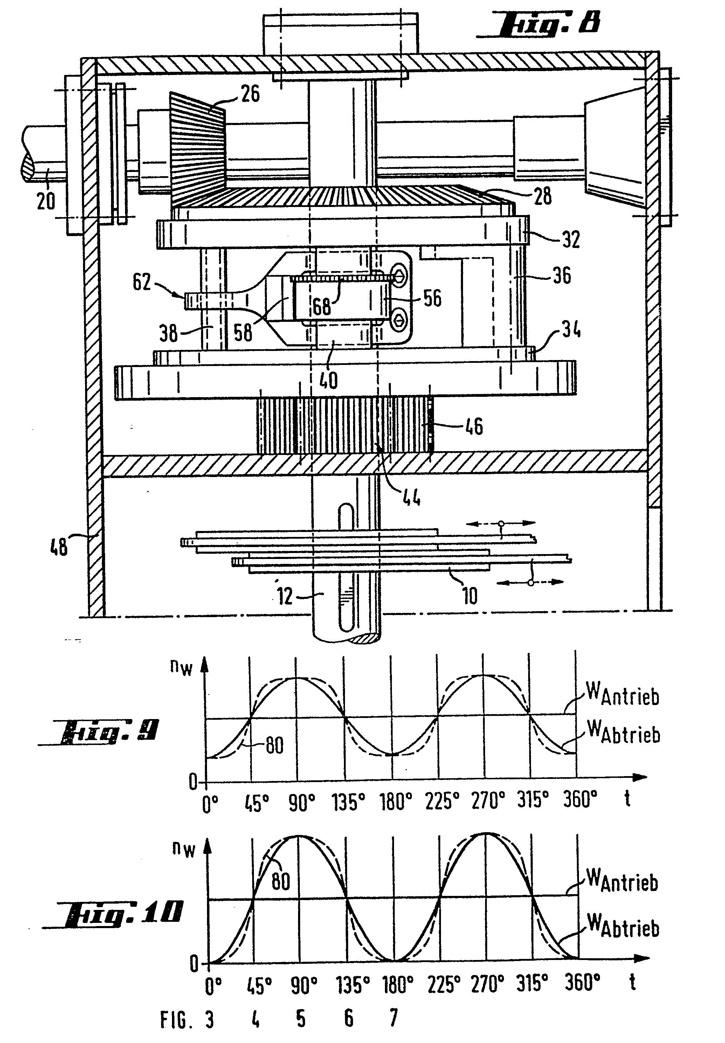

Im vorliegenden Beispiel ist das Planetengetriebe als Stirnradgetriebe ausgebildet, welches ein aussen verzahntes Sonnenrad 46 aufweist. Es ist aber auch möglich, das Planetengetriebe anders auszugestalten, beispielsweise mit einem innen verzahnten Sonnenrad zu versehen. Auch sind Planetengetriebe auf der Basis von Kettengetrieben und Zahnradgetrieben möglich. Das Planetengetriebe enthält zweckmässigerweise ein Übersetzungsverhältnis von Planetenrad zu Sonnenrad von 1:2. Dies bedeutet, dass die Abtriebsgeschwindigkeit mit zwei Schwingungen einer Zusatzgeschwindigkeit überlagert ist, so wie dies für das Übersetzungsverhältnis von 1:2 in den Figuren 9 und 10 dargestellt ist.

Wie bereits oben angedeutet, wird der Abtriebsgeschwindigkeit der Abtriebswelle durch die Kurbelwellen 40, 42, welche durch das Planetengetriebe 44, 46 angetrieben werden, eine Zusatzgeschwindigkeit aufgeprägt, die einmal positiv und einmal negativ ist und je nach Grösse des Kurbelradius bis zu einem vorübergehenden Stillstand der Abtriebswelle 12 führen kann, wie aus Figur 9 hervorgeht. Dabei entspricht die Bewegungsphase des Antriebsgliedes 30 der Figur 3 der Drehwinkelstellung 0 bzw. 360° in den Diagrammen der Figuren 9 und 10, da in dieser Stellung die grösste gegenläufige Bewegung erzeugt wird. Die Bewegungsphase des Antriebsgliedes 30 der Figur 4 entspricht der Drehwinkelstellung von 45°, da in dieser Phase die Winkelgeschwindigkeit des Antriebsgliedes 30 gleich der Winkelgeschwindigkeit der Abtriebswelle 12 ist. In der Bewegungsphase des Antriebsgliedes 30 der Figur 5 eilt die Abtriebswinkelgeschwindigkeit der Antriebswinkelgeschwindigkeit vor entsprechend der Winkelstellung von 90° in den Diagrammen 9 und 10. Die Figur 6 zeigt das Antriebsglied 30 in der Winkelstellung 135°, in der wiederum die Winkelgeschwindigkeit der Abtriebswelle 12 gleich der Winkelgeschwindigkeit des Antriebsgliedes 30 ist.

Der Unterschied der Geschwindigkeitsdiagramme der Figuren 9 und 10 ergibt sich durch die Grösse des Kurbelradius R.

In den Diagrammen der Figuren 9 und 10 ist die Bewegungskurve 80 eines bekannten Getriebes gestrichelt eingetragen, bei dem die Kurbeln der Kurbelwelle über ein Koppelglied mit einem Schwingarm verbunden ist. Ein Vergleich der beiden Kurven zeigt deutlich, den spitzeren Verlauf der Bewegungskurve beim Getriebe nach der Erfindung im Null-Bereich.

**Patentansprüche**

1. Getriebe zur Erzeugung eines ungleichförmigen Abtriebes aus einem gleichförmigen Antrieb, insbesondere für die Fachbildevorrichtung einer Webmaschine, vorzugsweise einer Bandwebmaschine, mit einem Planetengetriebe, dessen Planetenrad (44) in einem gleichförmig angetriebenen, koaxial zum ortsfesten Sonnenrad (46) rotierenden Antriebsglied (30) gelagert ist und das eine Kurbelwelle (40 bzw. 42) antreibt, deren Kurbel (50 bzw. 52) mit einer drehfest mit der Abtriebswelle (12) verbundenen Schwinge (62) gekoppelt ist, wobei das Antriebsglied zweiwangig ausgebildet ist und wobei die Wangen (32, 34) auf der Abtriebswelle zwischen zwei Lagerstellen derselben gelagert sind, dadurch gekennzeichnet, dass die Schwinge zweiarmig mit zwei um 180° gegeneinander versetzten Armen (58, 60) ausgebildet ist, dass das Antriebsglied (30) zwei Kurbelwellen (40, 42) antreibt, die um 180° gegeneinander versetzt zwischen den Wangen (32, 34) angeordnet sind und jeweils über ein Planetenrad (44) mit dem Sonnenrad (46) verbunden sind und gegenläufig schwingen, wobei jede Kurbel (50, 52) einen Lagerring trägt, der einen Reibkranz bzw. einen Zahnkranz (68) aufweist, der mit einem Reibbelag bzw. einer Zahnstange (70) auf dem jeweiligen Arm (58, 60) zusammenwirkt.

2. Getriebe nach Anspruch 1, dadurch gekennzeichnet, dass eine Stellvorrichtung (74) zur Einstellung des Abstandes der Arme (58, 60) bezüglich der Kurbeln (50, 52) vorgesehen ist.

3. Getriebe nach Anspruch 2, dadurch gekennzeichnet, dass die Stellvorrichtung (74) auswechselbare Unterlegbleche (78) verschiedener Dicke aufweist, die zwischen den Armen (58, 60) der Schwinge (62) und darauf angeordneten Laufblöcken (76) vorhanden sind.

## Claims

1. Transmission for producing a discontinuous movement from a continuous movement, particularly for use for a shedding mechanism of a weaving machine, especially a ribbon weaving machine, comprising: a planetary gearing, the planet wheel (44) of which being mounted on a drive member (30) having a uniform input and being pivoted coaxially to a stationary sun gear (46) and driving a crankshaft (40, 42), the crank (50, 52) of which being coupled with a rocker member (62) connected to an output shaft (12) for driving, wherein said driving member having to side walls (32, 34) pivotally supported on the output shaft between two bearings of which, characterized in that the rocker member has two arms (58, 60) offset to each other by 180°; the driving member (30) drives two crankshafts (40, 42) offset relative to each other by 180° and arranged between the side walls (32, 34) and rotating in opposite directions; a planet wheal (44) mounted on each of said crankshafts and arranged in meshing engagement with said sun gear (46); wherein each crank (50, 52) including a bearing ring having a friction ring, which cooperates with a friction lining on the respective arm (58, 60) of said rocker member, or a toothed ring (68), which cooperates with a toothed rack (70) on the respective arm (58, 60) of said rocker member.

2. Transmission according to claim 1, characterized in comprising a regulating mechanism (74) for adjusting the distance of the arms (58, 60) with reference to the cranks (50, 52).

3. Transmission according to claim 2, characterized in that the regulating mechanism (74) ncldes exchangeable packing shims (78) of various thicknesses, which are available between the arms (58, 60) of the rocker member (62) and the running blocks (76), which are arranged thereon.

## Revendications

1. Mécanisme de transmission destiné à produire un mouvement discontinu à partir d'un mouvement continu, notamment pour le mécanisme de formation de foule d'un métier tisser, de préférence un métier à tisser pour rubans, comportant un engrenage planétaire, dont la roue satellite (44) est montée dans un organe d'entraînement (30) entraîné en continu et tournant coaxialement par rapport à la roue planétaire fixe (46), et qui entraîne un vilebrequin (40 ou 42), dont le maneton (50 ou 52) est accouplé à une coulisse (62) solidaire en rotation de l'arbre mené (12), l'organe d'entraînement comportant deux flasques (32, 34), qui sont montés sur l'arbre mené entre deux points de support, caractérisé en ce que la coulisse comporte deux bras (58, 60), décalés de 180° l'un par rapport à l'autre, en ce que l'organe d'entraînement (30) entraîne deux vilebrequins (40, 42), qui sont disposés en étant décalés mutuellement de 180° entre les flasques (32, 34) et sont reliés respectivement par l'intermédiaire d'une roue satellite (44) à la roue planétaire (46) et oscillent dans des sens opposés, chaque maneton (50, 52) portant une bague de support qui comporte une couronne à friction ou une couronne dentée (68), qui coopère avec une garniture de friction ou une crémaillère (70) située sur le bras respectif (58, 60).

2. Mécanisme de transmission selon la revendication 1, caractérisé en ce qu'il est prévu un dispositif de réglage (74) servant à régler la distance des bras (58, 60) par rapport aux manetons (50, 52).

3. Mécanisme de transmission selon la revendication 2, caractérisé en ce que le dispositif de réglage (74) possède des tôles de calage interchangeables (78) présentant des épaisseurs différentes et qui sont disposées entre les bras (58, 60) de la coulisse (62) et des blocs de circulation (76) situés sur ces bras.

0 107 836

**Fig. 1**

**Fig. 2**

**Fig. 3**

*Fig. 4*

Fig. 5

*Fig. 6*

*Fig. 7*

*Fig. 8*

*Fig. 9*

*Fig. 10*

FIG. 3    4    5    6    7